(19) **Europäisches Patentamt**
**European Patent Office**
**Office européen des brevets**

(11) **EP 4 357 673 B1**

(12) **EUROPÄISCHE PATENTSCHRIFT**

(45) Veröffentlichungstag und Bekanntmachung des Hinweises auf die Patenterteilung:
**10.12.2025 Patentblatt 2025/50**

(21) Anmeldenummer: **23202605.4**

(22) Anmeldetag: **10.10.2023**

(51) Internationale Patentklassifikation (IPC):
*F23N 1/00* (2006.01)     *F23N 1/02* (2006.01)
*F23D 14/02* (2006.01)     *F23N 5/26* (2006.01)

(52) Gemeinsame Patentklassifikation (CPC):
**F23N 1/002; F23D 14/02; F23N 1/022; F23N 5/26;**
F23C 2900/9901; G06F 11/3684; G06F 11/3688;
G06F 11/3698

(54) **VERFAHREN ZUM BETREIBEN EINES HEIZGERÄTES, COMPUTERPROGRAMM, REGEL- UND STEUER-GERÄT UND HEIZGERÄT**

METHOD FOR OPERATING A HEATING DEVICE, COMPUTER PROGRAM, REGULATING AND CONTROL DEVICE AND HEATING DEVICE

PROCÉDÉ DE FONCTIONNEMENT D'UN APPAREIL DE CHAUFFAGE, PROGRAMME INFORMATIQUE, APPAREIL DE RÉGLAGE ET DE COMMANDE ET APPAREIL DE CHAUFFAGE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **17.10.2022 DE 102022127054**

(43) Veröffentlichungstag der Anmeldung:
**24.04.2024 Patentblatt 2024/17**

(73) Patentinhaber: **Vaillant GmbH**
**42859 Remscheid NRW (DE)**

(72) Erfinder:
• **Fischer, Christian**
**42859 Remscheid (DE)**

• **Resch, Marvin**
**42857 Remscheid (DE)**
• **Krah, Timo**
**42109 Wuppertal (DE)**
• **Nettingsmeier, Tim**
**42369 Wuppertal (DE)**
• **Deisling, Regina**
**58285 Gevelsberg (DE)**

(74) Vertreter: **Popp, Carsten et al**
**Vaillant GmbH**
**IR-IP**
**Berghauser Straße 40**
**42859 Remscheid (DE)**

(56) Entgegenhaltungen:
**EP-A1- 1 510 758**

**Beschreibung**

Die Erfindung betrifft ein Verfahren zum Betreiben eines Heizgerätes, ein Computerprogramm, ein Regel- und Steuergerät und ein Heizgerät.

Bei einem Betrieb eines Heizgerätes wird in der Regel eine Zusammensetzung eines Verbrennungsgemisches aus Brennstoff, insbesondere Brenngas, und Verbrennungsluft durch eine Regelung eingestellt. Hierfür wird häufig ein Signal einer Flammenüberwachung als Regelgröße herangezogen und Stellgröße der Regelung kann beispielsweise eine Öffnungsposition eines Gasventils sein, dass einen Massestrom Brenngas einem Massestrom Verbrennungsluft zusetzt.

Dabei können eintretende Änderungen, wie eine Alterung des Gasventils oder andere Einflüsse wie wetterbedingte Druckschwankungen in einer Zuführung Verbrennungsluft, Schwankungen der Gasqualität oder des Gasdruckes, Änderungen des Strömungswiderstandes im Strömungsweg des Heizgerätes die Regelung beanspruchen und zu kritischen Betriebszuständen des Heizgerätes beim Betrieb oder insbesondere einer Inbetriebnahme führen.

Einen großen und direkten Einfluss hat dabei das Gasventil und herstellungs- oder alterungsbedingte Toleranzen desselben. Nach dem Stand der Technik wird ein Korrekturwert der Streuung durch den Hersteller erfasst und im Heizgerät hinterlegt. Allerdings wird der Korrekturwert nur einmalig nach der Herstellung messtechnisch erfasst, so dass Messtoleranzen der Erfassung sowie eine mögliche fehlerhafte Eingabe des Korrekturwertes in das Heizgerät zusätzliche Fehlerquellen darstellen, die gegebenenfalls von der Regelung ausgeglichen werden müssten.

Die EP 1 510 758 A1 schlägt ein Verfahren vor, bei dem das Abgas eines Brenners einem Sensor zugeführt und der vom Sensor detektierte Istwert mit einem Sollwert verglichen wird, und die Differenz zwischen Soll- und Istwert eine Regelabweichung bildet. Dabei wird eine leistungsunabhängige Stellgröße generiert, die in ein Steuersignal zur Beeinflussung des Verhältnisses der Luftmenge zur Brennstoffmenge umgesetzt wird. Das Verfahren kann jedoch ein Aufschwingen der Regelung nicht verhindern.

Auch die EP 4 194 749 A1 hat eine Steuerung und/ oder Regelung einer Verbrennungseinrichtung zum Gegenstand. Es wird eine Reaktion einer Steuerung oder Regelung auf eine rasche Änderung eines Verbrennungsprozesses vorgeschlagen. Dabei wird ein Messwert, beispielsweise eines Verbrennungssensors, mit einem oberen und/ oder unteren Grenzwert verglichen und bei einem Über- bzw. Unterschreiten eine Reaktion der Regelung bzw. Steuerung eingeleitet. Dies kann erfolgen, indem ein Sollwert für einen Messwert aus dem Signal eines Sensors / und/ oder aus dem Grenzwert des Messwertes neu berechnet wird. Alternativ kann der Sollwert auch auf einen fest hinterlegten Wert geändert werden. Diese Verfahren erscheint als direkter Eingriff in die Regelung riskant im Hinblick auf unsichere Betriebszustände der Verbrennungseinrichtung.

Hiervon ausgehend ist es Aufgabe der Erfindung, ein Verfahren zum Betreiben eines Heizgerätes, ein Computerprogramm, ein Regel- und Steuergerät und ein Heizgerät vorzuschlagen, die die geschilderten Probleme des Standes der Technik zumindest teilweise überwinden. Insbesondere soll die Erfindung eine dauerhaft sichere Inbetriebnahme und ein dauerhaft sicheres Betreiben des Heizgerätes ermöglichen.

Zudem soll das Verfahren dazu geeignet sein, zumindest teilweise, automatisiert durchgeführt zu werden und möglichst geringe bauliche Veränderungen gegenüber einem Heizgerät nach dem Stand der Technik erfordern.

Diese Aufgaben werden gelöst durch die Merkmale der unabhängigen Patentansprüche. Weitere vorteilhafte Ausgestaltungen der hier vorgeschlagenen Lösung sind in den unabhängigen Patentansprüchen angegeben. Es wird darauf hingewiesen, dass die in den abhängigen Patentansprüchen aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt ein Verfahren zum Betreiben eines Heizgerätes bei, wobei das Heizgerät eine Regelung und eine Vorsteuerung aufweist, mit der das einem Brenner des Heizgerätes zugeführte Verbrennungsgemisch aus Brennstoff und Verbrennungsluft einstellbar ist, wobei eine Stellgröße u einer Öffnungsposition eines Gasventils aus einer Stellgröße $u_C$ der Regelung und einer Stellgröße $u_F$ der Vorsteuerung zu einer Stellgröße u kumuliert wird, und eine Korrekturfunktion f(u) aus der Stellgröße u eine korrigierte Stellgröße $u_T$ =f(u) bildet, so dass die Stellgröße $u_C$ der Regelung gemindert wird und sich die nominale Stellgröße u der Stellgröße $u_F$ der Vorsteuerung annähert.

Das Verfahren kann insbesondere dauerhaft bzw. permanent während des Betriebes oder einer Inbetriebnahme eines Heizgerätes durchgeführt werden. Das Verfahren dient insbesondere einer dauerhaft sicheren Inbetriebnahme eines Heizgerätes bzw. einem dauerhaft sicheren Betreiben desselben.

Das Heizgerät kann zumindest einen Wärmeerzeuger, insbesondere einen Gas-Brennwertkessel, umfassen, der durch Verbrennung eines Brennstoffes Wärmeenergie freisetzt und über mindestens einen Wärmetauscher auf einen Heizkreis übertragen kann, wobei Verbraucher des Heizkreises über einen Vorlauf und einen Rücklauf an das Heizgerät anschließbar sind. Die bei der Verbrennung entstehenden Abgase können über einen Abgaskanal des Heizgerätes einer Abgasanlage zugeführt werden. Im Heizgerät kann im Heizkreislauf eine Umwälzpumpe dazu eingerichtet sein, ein Wärmeträgermedium (Heizungswasser) umzuwälzen, wobei über einen Heizungsvorlauf erwärmtes Wärmeträgermedium Verbrauchern, wie Konvektoren oder Flächenheizungen, zugeführt und über einen Heizungsrücklauf zum Wärmeerzeuger bzw. dem mindestens einen Wärmetauscher rückgeführt werden kann.

Hierzu kann das Heizgerät eine Fördereinrichtung, insbesondere ein Gebläse, aufweisen, das ein Gemisch aus Verbrennungsluft und Brennstoff (z.B. Wasserstoff) einem Brenner des Heizgerätes zuführen kann. Die Fördereinrichtung kann dabei eine Leistungsregelung umfassen, insbesondere einen Drehzahlregler. Das Heizgerät kann einen elektronischen Gas Luftverbund aufweisen, bei dem anhand eines Signals einer Flammenüberwachung ein Rückschluss auf die Flammen und das Verbrennungsluftverhältnis (auch als Lambda oder Luftzahl bezeichnet) erfolgen kann, so dass eine Regelung desselben ermöglicht wird. Insbesondere kann - auch unter Berücksichtigung dieses Signals - ein in der Gaszuführung befindliches Gasventil geöffnet und/oder geschlossen werden. Das Heizgerät kann insbesondere zur Verbrennung von Wasserstoff als Brennstoff oder einem Gemisch enthaltend Wasserstoff eingerichtet sein. Das Gemisch kann dabei einen Gehalt von mindestens 80% oder mindestens 90% Wasserstoff aufweisen.

Zudem kann das Heizgerät eine Flammenüberwachung aufweisen. Häufig kommt hierzu eine Ionisationselektrode zum Einsatz, die einen Ionisationsstrom der Flamme zum Feststellen derselben nutzen kann. Dieses Prinzip ist jedoch bei einer Wasserstoffflamme, nicht robust einsetzbar, da bei der Verbrennung von Wasserstoff erheblich weniger freie Ladungsträger entstehen. Häufig kommen daher bei mit Wasserstoff betriebenen Heizgeräten andere Verfahren, wie beispielsweise ein Erfassen der von der Flamme emittierten elektromagnetischen Strahlung, insbesondere Infrarot- (IR-) und/oder UV- (Ultraviolett-) Strahlung oder ein Erfassen der Flammentemperatur zum Einsatz. Ein Signal einer Flammenüberwachung kann dabei das Vorhandensein einer Flamme anzeigen, sowie ein Rückschluss auf ein Verbrennungsluftverhältnis der Flamme ermöglichen, wodurch es häufig auch für eine Regelung des Verbrennungsluftverhältnis Einsatz findet.

Das Heizgerät kann insbesondere die Brennerleistung und damit die Wärmeabgabe an den Bedarf anpassen, auch als modulieren bezeichnet. Hierzu kann bei einem Erkennen eines geänderten Wärmebedarfs, beispielsweise unter Einbeziehung einer Vorlauf- und Rücklauftemperatur eines mit dem Heizgerät verbundenen Heizkreises, ein Regel- und Steuergerät des Heizgerätes eine Leistung der Fördereinrichtung (des Gebläses) des Heizgerätes und damit den zugeführten Massestrom Verbrennungsluft an den Wärmebedarf anpassen. Gleichzeitig passt eine Regelung den zuzusetzenden Massestrom Brennstoff an den sich ändernden Massestrom Verbrennungsluft an.

Eine Regelung des Heizgerätes, häufig von einem Regel- und Steuergerät desselben ausgeführt, muss somit einen (vorgegebenen) Modulationspunkt und ein entsprechendes Verbrennungsluftverhältnis einregeln. In die Regelstrecke einwirkende Toleranzen, wie beispielsweise eine Toleranz des Gasventils, oder Umwelteinflüsse müssen durch die Regelung ausgeglichen werden. Dies kann unter anderem bei schnellen Änderungen der Modulation und einem damit verbundenen Einschwingen der Regelung zu kritischen Betriebszuständen des Heizgerätes führen. Somit kann eine Regelgröße ein Signal einer Flammenüberwachung und eine Stellgröße $u_C$ eine vom Gasventil einzustellende Öffnungsposition (Öffnungsweite) sein, mit der der Massestrom Brenngas gesteuert werden kann. Dabei ist die Dynamik vieler Sensoren abhängig vom Betriebspunkt des Heizgerätes, so dass ein allgemeiner Grenzwert für eine schnelle Änderung der Modulation nicht angegeben werden kann. Ein Fachmann kann jedoch in empirischen Versuchen an einem Referenzheizgerät prüfen, ab welcher Geschwindigkeit der Modulation ein unerwünschtes Einschwingen auftreten kann. Bei wandhängenden Heizgeräten könnte man ab einer Änderungsgeschwindigkeit von 1 Kilowatt pro Sekunde [kW/s] oder 2 Kilowatt pro Sekunde von einer schnellen Änderung ausgehen, die mit einem verstärkten Einschwingen einhergehen kann.

Die Regelung kann zudem eine Vorsteuerung aufweisen, die zum Ausgleich von (regelmäßigen) Störungen oder Toleranzen die Stellgröße mit einem Korrekturwert beaufschlagt. Beispielsweise kann ein vom Hersteller erfasster und übermittelter Korrekturwert für das Gasventil im Rahmen der Installation desselben in die Vorsteuerung eingetragen werden. Die Vorsteuerung kann eine Stellgröße $u_F$ erzeugen, die mit der Stellgröße $u_C$ der Regelung kumuliert eine nominale Stellgröße u ergibt, die eine einzustellende Öffnungsposition des Gasventils angibt.

Eine Inbetriebnahme eines Heizgerätes kann dabei wie folgt ablaufen. Zunächst kann, beispielsweise ein Regel- und Steuergerät des Heizgerätes, eine Fördereinrichtung (Gebläse) auf eine vorgegebene Startleistung bzw. Startdrehzahl, anfahren. Anschließend kann, nach dem Erreichen der Startleistung bzw. Startdrehzahl ein für die Startdrehzahl vorgegebener Massestrom Brennstoff durch Einstellung einer Öffnungsposition des Gasventils zugeführt und ein Zündvorgang eingeleitet werden. Hierbei besteht ein besonders hohes Risiko für Auswirkungen von Bauteiltoleranzen oder anderen Einflüssen, da eine Rückkopplung, beispielsweise durch eine Flammenüberwachung, zu dem zugeführten Verbrennungsgemisch zum Zeitpunkt der Zündung bis zu einem Auftreten und Stabilisieren einer Flamme kaum oder nicht möglich ist.

Ein Gedanke der Erfindung besteht darin, eine Korrekturfunktion f(u) der nominalen Stellgröße u einzubinden, die die Stellgröße $u_C$ der Regelung mindert und insbesondere weitestgehend Null annähert. Hierfür kann insbesondere die Korrekturfunktion anhand von zwei Komponenten ausgewählt aus a) der nominalen Stellgröße u, b) der Stellgröße der Regelung $u_C$, und c) der Stellgröße $u_F$ der Vorsteuerung einer korrigierte Stellgröße $u_T$ ermitteln, die eine vom Gasventil einzustellende Öffnungsposition und damit einen zuzuführenden Massestrom Brenngas angibt. In diesem Zusammenhang wird angemerkt, dass zur Bestimmung der korrigierten Stellgröße $u_T$ nur die nominale Stellgröße u bekannt sein muss. Für eine Anpassung der Korrekturfunktion müssen zwei Stellgrößen gegeben sein: $f(u_C, u_F)$, $f(u_F, u_T)$ oder $f(u_C, u_T)$.

Somit kann die Korrekturfunktion $f(u)$ bewirken, dass die Regelung kaum bzw. nur in sehr geringem Maße eingreifen muss, weil die von der Vorsteuerung und der Regelung bereitgestellten Stellgrößen $u_F$, $u_C$ durch Anwenden der Korrekturfunktion und Erzeugen einer korrigierten Stellgröße $u_T$ als einzustellende Öffnungsposition des Gasventils in nur sehr geringem Maße durch die Regelung korrigiert werden muss und so die Stellgröße $u_C$ der Regelung durch die Korrekturfunktion möglichst gering gehalten bzw. an null angenähert wird.

Vorteilhaft können so kritische Zustände aufgrund eines Einschwingens der Regelung, beispielsweise bei einer Modulation des Heizgerätes, deutlich gemindert bzw. weitestgehend verhindert werden. So kann ein Betreiben des Heizgerätes erfolgen, indem zuerst eine nominale Stellgröße als Öffnungsposition des Gasventils bestimmt wird, die anschließend durch die Korrekturfunktion $f(u)$ in eine korrigierte Stellgröße $u_T$ als einzustellende Öffnungsposition des Gasventils überführt wird. Die Korrekturfunktion $f(u)$ bewirkt, dass die Regelstrecke im Zusammenhang für den Regler so aussieht, als sei die Regelstrecke nominal. Dabei übersetzt die Korrekturfunktion die Stellgröße $u$, die es für eine nominale Regelstrecke benötigt in die dafür tatsächlich benötigte Stellgröße $u_T$. Dadurch ist ein Eingreifen der Regelung nicht oder nur in sehr geringen Maßen notwendig und regelungsbedingte Einschwingvorgänge können weitestgehend vermieden werden.

Beispielhaft kann die Korrekturfunktion der Regelung (dem Regler) und der Vorsteuerung nachgeordnet implementiert werden. Die Korrekturfunktion ermittelt anhand von zwei Stellgrößen ausgewählt aus a) der nominalen Stellgröße $u$, b) der Stellgröße der Regelung $u_C$, und c) der Stellgröße $u_F$ der Vorsteuerung als Funktionswert eine korrigierte Stellgröße $u_T$, die zur Einstellung der Öffnungsposition des Gasventils genutzt wird. Die korrigierte Stellgröße $u_T$ kann bewirken, dass die Stellgröße $u_C$ der Regelung gegen null geht bzw. sich null annähert und sich somit die nominale Stellgröße $u$ der Stellgröße $u_F$ der Vorsteuerung annähert bzw. weitestgehend angleicht. Dabei wird die Korrekturfunktion derart angelernt, dass $u=u_F$ gilt bzw. angenähert wird. Damit diese Funktion keinen direkten Eingriff in die Regelung vornimmt und auch nicht die Stabilität der gleichen beeinträchtigt, werden Systemeinflüsse, die aus dem Lernverhalten resultieren, regelungstechnisch eliminiert. So könnte, wenn sich die Regelung in Ruhelage befindet, und die Korrekturfunktion sich beginnt anzupassen, und entsprechend das Übersetzungsverhältnis von $u$ nach $u_T$ verändert ($u_T = f(u)$) bei gleichbleibenden $u$ ein anderes $u_T$ ausgegeben werden, wodurch das System aus der Ruhelage gebracht werden kann, und somit durch das Anpassen unerwünscht angesteuert wird. Das Ziel besteht darin, dass ein Anpassen der Korrekturfunktion keine Auswirkung auf $u_T$ hat. Hierzu kann sich $u$ verändern, damit $u_T$ unbeeinflusst bleiben kann. Hierzu wird die Rückführung von der Lernfunktion/ Anpassung zur Regelung genutzt, um den Regler so zu beeinflussen, dass ein solch unerwünschter Einfluss gezielt ausgeblendet, und somit die Stabilität der Regelung nicht beeinflusst wird.

Die Korrekturfunktion $f(u)$ kann durch Erfassen der Stellgrößen über einen längeren Zeitraum empirisch erzeugt werden. Hierzu kann diese permanent oder in kurzen zeitlichen Abständen die Stellgröße $u$ erfassen, die aus dem Anteil des Reglers $u_C$ und dem Anteil der Vorsteuerung $u_F$ zusammengesetzt sein kann. Dabei kann insbesondere beobachtet werden, welche Änderung (Abweichung) die nominale Stellgröße $u$ durch das Eingreifen der Regelung im Rahmen einer Modulation erfährt. Aus dieser Abweichung der nominalen Stellgröße $u$ kann die Korrekturfunktion $f(u)$ ermittelt werden.

Gemäß einer Ausgestaltung kann die Korrekturfunktion während des Betriebes des Heizgerätes und der Durchführung eines hier vorgeschlagenen Verfahrens permanent oder in kurzen zeitlichen Abständen angepasst werden, um beispielsweise Änderungen vom Umgebungsbedingungen oder eine alterungsbedingte Veränderung der Gasventilcharakteristik zu kompensieren. Beispielsweise kann die Anpassung der Korrekturfunktion durch Nutzung einer künstlichen Intelligenz, die während des Betreibens des Heizgerätes und einer Durchführung eines hier vorgeschlagenen Verfahrens die Stellgrößen erfasst (anlernt), auswertet, und die Korrekturfunktion anpasst.

Die Korrekturfunktion $f(u)$ kann beispielsweise als Kennfeld oder in Form einer Lookup-Tabelle gegeben sein, die zwei Stellgrößen, ausgewählt aus der nominalen Stellgröße $u$, der Stellgröße der Regelung $u_C$, und der Stellgröße $u_F$ der Vorsteuerung, eine korrigierte Stellgröße $u_T$ zuordnet. Die Korrekturfunktion $f(u)$ kann hierzu beispielsweise auf einem Speicher eines Regel- und Steuergerätes des Heizgerätes hinterlegt sein und angepasst werden.

Gemäß einer Ausgestaltung kann die Anpassung der Korrekturfunktion $f(u)$ bei einer schnellen Änderung, also einem hohen Gradienten, des Massestromes Verbrennungsluft ausgesetzt werden. Nach einer Stabilisierung des Massestromes Verbrennungsluft, gegebenenfalls mit einer darauffolgenden Sicherheitszeit von beispielsweise 10 Sekunden kann die Anpassung fortgesetzt werden. Ein hoher Gradient des Massestromes Verbrennungsluft kann beispielsweise bei einer hohen Modulationsgeschwindigkeit des Heizgerätes oder auch durch äußere Einflüsse, wie Windstöße im Bereich einer Ansaugung der Verbrennungsluft oder eines Ausganges der Abgasanlage, entstehen. Damit verbundene Reaktionen der Regelung und auftretenden Einschwingvorgänge können ein Erfassen der Anpassung der Korrekturfunktion erschweren bzw. mit hohen Ungenauigkeiten belegen. Beispielsweise kann ein Aussetzen des Anpassens der Korrekturfunktion bei einem Überschreiten eines Grenzwertes des Gradienten des Massestromes Verbrennungsluft ausgesetzt werden und bei einem unterschreiten, gegebenenfalls nach Ablauf einer zusätzlichen Sicherheitszeit fortgesetzt werden. Gegebenenfalls kann es sinnvoll erscheinen zwei Grenzwerte einzubeziehen, insbesondere einen Grenzwert für positive und einen Grenzwert für negative Gradienten.

In diesem Zusammenhang wird angemerkt, dass ein Massestrom (Verbrennungsluft, Brennstoff oder Gemisch aus beidem) auch einen Volumenstrom kennzeichnen kann und umgekehrt. So ist ein Massestrom in Kenntnis der Dichte und der Temperatur des Mediums einfach in einen Volumenstrom überführbar und umgekehrt, in einer einfachen Ausgestaltung durch einen Faktor und in einer präzisen Ausgestaltung durch ein Erfassen/Messen der Zustandsgrößen des Mediums (Verbrennungsluft, Brenngas).

Gemäß einer Ausgestaltung kann eine Anpassung der Korrekturfunktion $\Delta u$ als Ableitung nach der Zeit erfolgen. Beispielsweise durch Integration nach dem I-Anteil kann ein gegensätzliches Signal generiert werden, wodurch eine Anpassung der Korrekturfunktion $u_T = f(u)$ nicht mehr an dessen Ausgangsgröße $u_T$ ersichtlich ist. Im Rahmen einer Anpassung der Korrekturfunktion, ändert sich diese kontinuierlich, während gleichzeitig auch die Regelung ein u stellt. Damit würden Änderungen von $u_T$ sich aus der Regelung mit Vorsteuerung sowie aus Funktionsänderungen von f(u) zusammensetzen. Durch eine Veränderung von u gemäß $\frac{d\Delta u}{dt}$ ($\Delta u$ entspricht dabei der Änderung von u durch die Anpassung der Korrekturfunktion) kann erreicht werden, dass $u_T$ ausschließlich von der Regelung abhängig ist. Hierzu kann beispielsweise der Integrator vom I-Anteil des Reglers zur Verrechnung genutzt werden.

Nach einem weiteren Aspekt wird auch ein Computerprogramm vorgeschlagen, welches zur (zumindest teilweisen) Durchführung eines hier vorgestellten Verfahrens eingerichtet ist. Dies betrifft mit anderen Worten insbesondere ein Computerprogramm (-produkt), umfassend Befehle, die bei der Ausführung des Programms durch einen Computer, diesen veranlassen, ein hier vorgeschlagenes Verfahren auszuführen. Das Computerprogramm kann insbesondere auf einem Regel- und Steuergerät des Heizgerätes durchgeführt werden.

Nach einem weiteren Aspekt wird auch ein maschinenlesbares Speichermedium vorgeschlagen, auf dem das Computerprogramm gespeichert ist. Regelmäßig handelt es sich bei dem maschinenlesbaren Speichermedium um einen computerlesbaren Datenträger.

Nach einem weiteren Aspekt wird auch ein Regel- und Steuergerät für ein Heizgerät vorgeschlagen, eingerichtet zur Durchführung eines hier vorgeschlagenen Verfahrens. Das Regel- und Steuergerät kann hierzu beispielsweise einen Prozessor aufweisen, und/oder über diesen verfügen. In diesem Zusammenhang kann der Prozessor beispielsweise das auf einem Speicher (des Regel- und Steuergeräts) hinterlegte Verfahren ausführen. Das Regel- und Steuergerät kann hierfür insbesondere mit einer Fördereinrichtung und einer Flammenüberwachung elektrisch verbunden sein. Zudem können auf einem Speicher des Regel- und Steuergerätes im Rahmen der Durchführung eines hier vorgeschlagenen Verfahrens erfasste oder benötigte Daten hinterlegt werden, beispielsweise die Korrekturfunktion f(u).

Nach einem weiteren Aspekt wird auch ein Heizgerät vorgeschlagen, aufweisend ein hier vorgeschlagenes Regel- und Steuergerät. Bei dem Heizgerät kann es sich um ein Gasheizgerät handeln. Das Gasheizgerät kann einen Brenner, eine Fördereinrichtung, ein Gasventil und eine Regelung und eine Vorsteuerung für eine Zusammensetzung eines, einem Brenner des Heizgerätes zuzuführenden, Verbrennungsgemisches aus Brenngas und Verbrennungsluft aufweisen.

Die im Zusammenhang mit dem Verfahren erörterten Details, Merkmale und vorteilhaften Ausgestaltungen können entsprechend auch bei dem hier vorgestellten Computerprogramm, dem Regel- und Steuergerät, dem Heizgerät und der Verwendung auftreten und umgekehrt. Insoweit wird auf die dortigen Ausführungen zur näheren Charakterisierung der Merkmale vollumfänglich Bezug genommen.

Hier werden somit ein Verfahren zum Betreiben eines Heizgerätes, ein Computerprogramm, ein Regel- und Steuergerät, ein Heizgerät und eine Verwendung angegeben, welche die mit Bezug auf den Stand der Technik geschilderten Probleme zumindest teilweise lösen. Insbesondere tragen das Verfahren zum Betreiben eines Heizgerätes, das Computerprogramm, das Regel- und Steuergerät, das Heizgerät sowie die Verwendung zumindest dazu bei, eine sichere Zündung bzw. Startvorgang eines Heizgerätes, insbesondere bei einem wasserstoffbetriebenen Heizgerät, zu ermöglichen. Weiter vorteilhaft ist ein hier vorgeschlagenes Verfahren vollständig computerimplementiert durchführbar und erfordert somit keine baulichen Änderungen an einem Heizgerät.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:

Fig. 1: ein hier vorgeschlagenes Heizgerät,
Fig. 2: eine Anordnung zur Durchführung eines hier vorgeschlagenen Verfahrens, und
Fig. 3 a)-d) und Fig. 4: Parameterverläufe, die sich bei Durchführung eines hier vorgeschlagenen Verfahrens einstellen können.

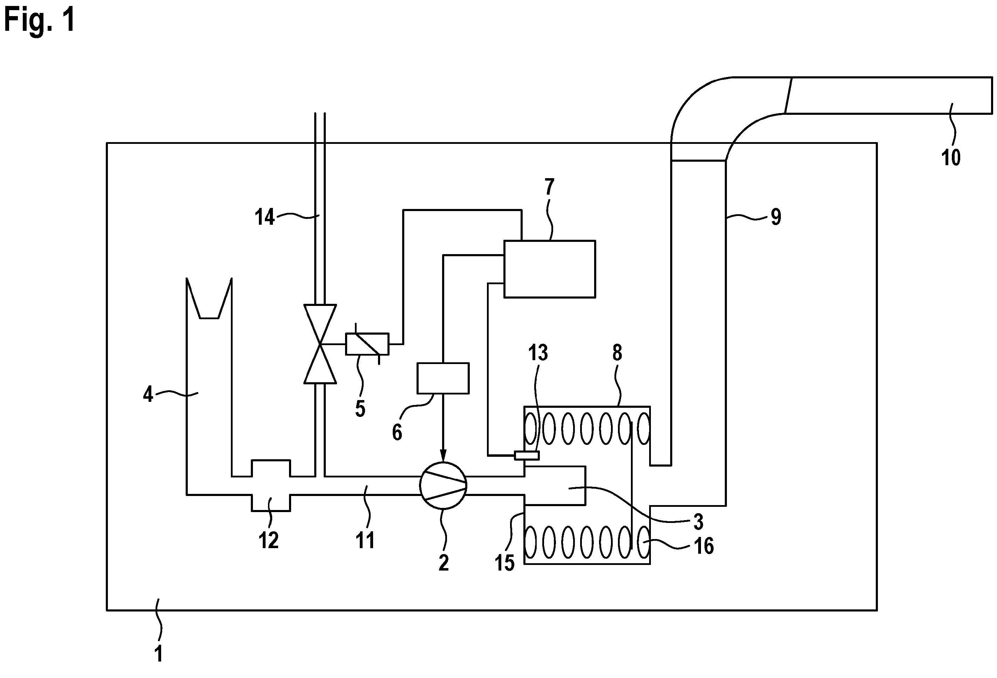

Fig. 1 zeigt beispielhaft und schematisch ein hier vorgeschlagenes Heizgerät 1. Dieses kann einen in einer Brennkammer 8 angeordneten Brenner 3 umfassen. Über eine Zuführung Verbrennungsluft 4, in der ein Massenstromsensor 12 angeordnet sein kann, kann Verbrennungsluft durch eine Fördereinrichtung 2, insbesondere als Gebläse ausgebildet, angesaugt werden. Die Fördereinrichtung 2 kann mit einem Drehzahlregler 6 verbunden sein, der mittels eines pulsweitenmodulierten (PWM-) Signals eine Drehzahl n der Fördereinrichtung 2 regeln kann. Ein Gasventil 5 kann dem angesaugten Luftmassenstrom Verbrennungsluft Brenngas aus einer Gaszuführung 14 zusetzen und ein Sicherheitsventil sowie ein Gasregelventil zur Steuerung des zuzusetzenden Massestromes Brenngas umfassen. Dabei kann anhand der Öffnungsposition des Gasregelventils ein zuzusetzender Massestrom Brenngas gesteuert werden. Das erzeugte Verbrennungsgemisch aus Brenngas und Verbrennungsluft kann über einen Gemischkanal 11 zum Brenner 3 strömen. Der Brenner 3 kann eine Zylinderform aufweisen, die mit einer Grundfläche an einer Brennertür 15 derart befestigt sein kann, dass Verbrennungsgemisch aus dem Gemischkanal in den Brenner 3 strömen kann. Die Verbrennungsprodukte können nach der Verbrennung über ein Abgasrohr 9 des Heizgerätes und eine Abgasanlage 10 nach Außen abgeleitet werden. Im Bereich der Brennkammer 8 kann ein Wärmetauscher 16 angeordnet sein, der bei der Verbrennung entstehende Wärme beispielsweise auf einen in einem Heizkreis zirkulierenden Wärmeträger übertragen kann.

Das Heizgerät 1 an bzw. in der Brennertür 15 eine (Vorrichtung zur) Flammenüberwachung 13 aufweisen, die hier als Sensor für von der Flamme emittierte UV- (Ultraviolett-) Strahlung ausgebildet sein kann. Ein Signal der Flammenüberwachung 13 kann zur Regelung des Verbrennungsgemisches herangezogen werden.

Ein Regel- und Steuergerät 7 kann zur Regelung des Heizgerätes 1 eingerichtet sein. Hierfür kann dieses beispielsweise mit dem Drehzahlregler 6, der Fördereinrichtung 2, dem Gasventil 5 und der Flammenüberwachung 13 elektrisch verbunden sein. Das Regel- und Steuergerät 7 kann zur Durchführung eines hier vorgeschlagenen Verfahrens eingerichtet sein.

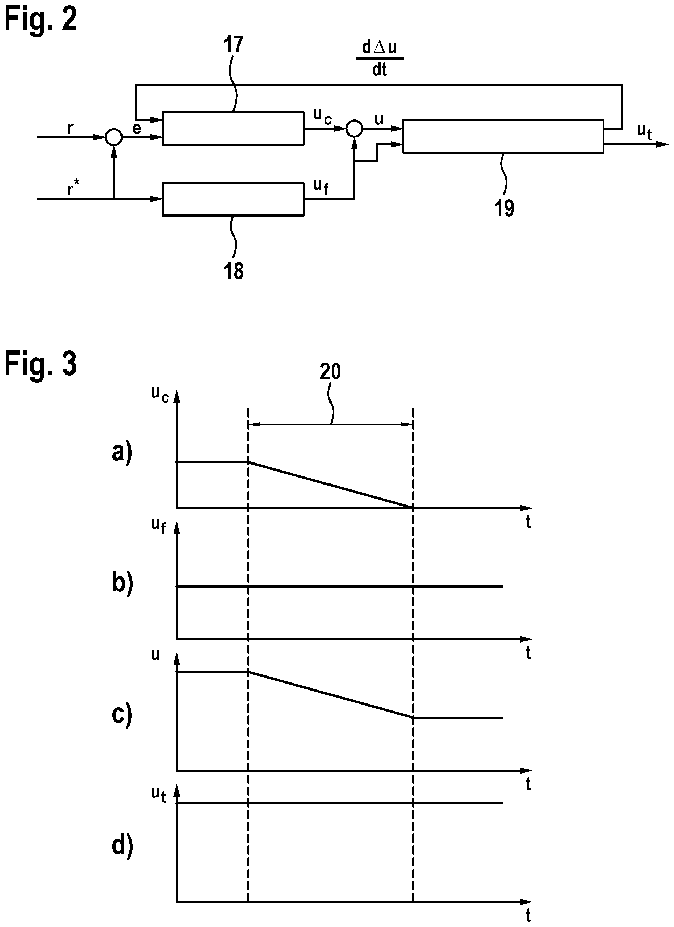

Fig. 2 zeigt beispielhaft und schematisch eine Anordnung zur Durchführung eines hier vorgeschlagenen Verfahrens. Die Anordnung kann beispielsweise Bestandteil des Regel- und Steuergerätes 7 sein. Gezeigt wird ein Regler 17 der eine Regelgröße e (beispielsweise eine Abweichung eines Istwertes r eines Widerstandes eines Glühzünders (HSI-Hot Surface Ignitor) von einem Sollwert r* desselben) erfasst und eine Stellgröße $u_C$ bereitstellt, eine Vorsteuerung 18, die eine Stellgröße $u_F$ bereitstellt und eine Korrektureinrichtung 19, die, die aus der Stellgröße $u_C$ der Regelung und aus der Stellgröße $u_F$ der Vorsteuerung gebildete Stellgröße u mittels der Korrekturfunktion f(u) in die korrigierte Stellgröße $u_T$ überführt und diese ausgibt. Die korrigierte Stellgröße $u_T$ kann eine Öffnungsstellung des Gasventils 5 angeben und an dieses weitergeleitet werden.

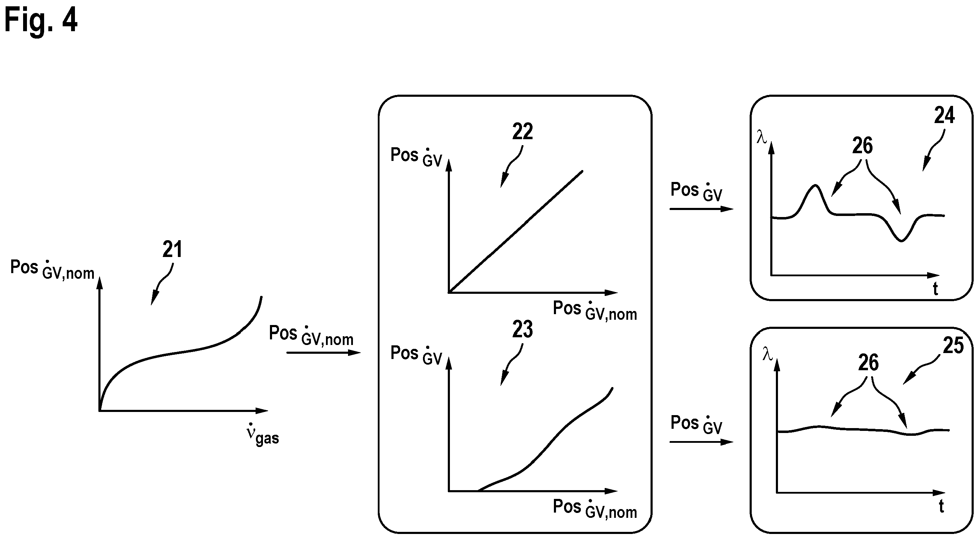

Die Korrektureinrichtung 19 kann permanent während des Betriebes des Heizgerätes 1 die Korrekturfunktion f(u) anpassen und so sich ändernde Bedingungen (Alterung des Gasventils 5 oder Änderung von Umgebungsbedingungen) erfassen und in der Korrekturfunktion abbilden. Hierzu kann beispielsweise die Stellgröße $u_C$ des Reglers 17 erfasst werden und die Korrekturfunktion derart angepasst werden, dass diese gegen null geht. Einen Systemein-griff $\frac{d\Delta u}{dt}$, der von der kontinuierlichen Anpassung (Lernvorgang) verursacht wird, kann an den Regler 17 übergeben werden. Somit kann der Regler 17 diesen durch ein entgegengesetztes Signal eliminieren. Die Fig. 3 a) bis d) und Fig. 4 zeigen Parameterverläufe einer Anpassung 20 der Korrekturfunktion f(u), die sich bei Durchführung eines hier vorgeschlagenen Verfahrens einstellen können. Dabei zeigt die Figur 3a) einen Stellgröße $u_C$ des Reglers 17, die Fig. 3b) eine Stellgröße $u_F$ der Vorsteuerung 18, die Fig. 3c) ein aus der Stellgröße $u_C$ des Reglers 17 und der Stellgröße $u_F$ der Vorsteuerung 18 kumulierte Stellgröße u und Fig. 3d) eine mittels der Korrekturfunktion f(u) gebildete Stellgröße $u_T$. Erkennbar gleicht der Regler $u_C$ vor der Anpassung 20 eine Toleranz oder Umgebungsbedingung aus. Während der Anpassung 20 wird die Korrekturfunktion f(u) so angepasst, dass $u_C$ auf null gesenkt wird (Fig. 3a)). Im Ergebnis wird auch die Stellgröße u gemindert (Fig. 3c)), wobei die korrigierte Stellgröße $u_T$ sich nicht ändert (Fig. 3d)).

Die Fig. 4 zeigt eine, wie Eingriffe des Reglers 17 beim Modulieren des Heizgerätes 1 mittels eines hier vorgeschlagenen Verfahrens reduziert werden können. Ein erstes Diagramm 21 zeigt eine nominale Öffnungsposition $Pos_{GVnom}$ des Gasventils 5. Durch eine Korrekturfunktion gemäß dem zweiten Diagramm 22 oder dem dritten Diagramm 23 kann die nominale Öffnungsposition $Pos_{GVnom}$ des Gasventils 5 in eine Soll-Öffnungsposition $Pos_{GV}$ überführt werden. Dabei wurde die im dritten Diagramm 23 gezeigte Korrekturfunktion durch Anpassung 20 während des Betriebs des Heizgerätes 1 aus der im zweiten Diagramm 22 gezeigten Korrekturfunktion gebildet. Das vierte Diagramm 24 zeigt den Verlauf des eingestellten Verbrennungsluftverhältnisses λ mit der nicht angepassten Korrekturfunktion aus dem zweiten Diagramm 22. Erkennbar ist ein Über- und Unterschwingen 26 während einer Modulation des Heizgerätes 1, da der Regler 17 Toleranzen oder Umgebungseinflüsse ausregeln muss.

Das fünfte Diagramm 25 zeigt den Verlauf des eingestellten Verbrennungsluftverhältnisses λ bei einer Korrektur mit der angepassten Korrekturfunktion gemäß dem vierten Diagramm 23. Das in Diagramm 24 erkennbare Über- und Unterschwingen 26 konnte durch die Anwendung der angepassten Korrekturfunktion (drittes Diagramm 23) fast vollständig verhindert werden.

Bezugszeichenliste

| | |
|---|---|
| 1 | Heizgerät |
| 2 | Fördereinrichtung |
| 3 | Brenner |
| 4 | Zuführung Verbrennungsluft |
| 5 | Gasventil |
| 6 | Drehzahlregler |
| 7 | Regel- und Steuergerät |
| 8 | Brennkammer |
| 9 | Abgasrohr |
| 10 | Abgasanlage |
| 11 | Gemischkanal |
| 12 | Massenstromsensor |
| 13 | Flammenüberwachung |
| 14 | Gaszuführung |
| 15 | Brennertür |
| 16 | Wärmetauscher |
| 17 | Regler |
| 18 | Vorsteuerung |
| 19 | Korrektureinrichtung |
| 20 | Anpassung |
| 21 | erstes Diagramm |
| 22 | zweites Diagramm |
| 23 | drittes Diagramm |
| 24 | viertes Diagramm |
| 25 | fünftes Diagramm |
| 26 | Über- und Unterschwingen |

**Patentansprüche**

1. Verfahren zum Betreiben eines Heizgerätes (1), aufweisend eine Regelung und eine Vorsteuerung des einen Brenner (3) des Heizgerätes (1) zugeführten Verbrennungsgemisches aus Brennstoff und Verbrennungsluft, wobei eine nominale Stellgröße u zur Einstellung einer Öffnungsposition eines Gasventils (5) aus einer Stellgröße $u_C$ der Regelung und einer Stellgröße $u_F$ der Vorsteuerung kumuliert wird, und eine korrigierte Stellgröße $u_T$ mittels einer Korrekturfunktion $u_T = f(u)$ gebildet wird, so dass die Stellgröße $u_C$ der Regelung gemindert wird und sich die nominale Stellgröße u der Stellgröße $u_F$ der Vorsteuerung annähert.

2. Verfahren nach Anspruch 1, wobei die Stellgröße $u_C$ der Regelung sich Null annähert oder angleicht.

3. Verfahren nach einem der vorangehenden Ansprüche, wobei die Korrekturfunktion f(u) während des Betriebes des Heizgerätes (1) angepasst wird.

4. Verfahren nach Anspruch 3, wobei das Anpassen der Korrekturfunktion f(u) bei Überschreiten eines vorgegebenen Änderungsmaßes des Massestromes Verbrennungsluft ausgesetzt wird.

5. Verfahren nach Anspruch 4, wobei bei einem Anpassen der Korrekturfunktion ein Erzeugen eines gegensätzlichen Signals erfolgt, wodurch bei laufendem Betrieb des Heizgerätes (1) eine Auswirkung der Anpassung auf die korrigierte Stellgröße $u_T$ vermieden wird.

6. Verfahren nach einem der vorangehenden Ansprüche, wobei die Korrekturfunktion f(u) für den gesamten Modulationsbereich des Heizgerätes (1) eine korrigierte Stellgröße $u_T = f(u)$ bereitstellt.

7. Regel- und Steuergerät (7) eingerichtet, ein Verfahren nach einem der Ansprüche 1 bis 6 auszuführen.

8. Heizgerät (1), aufweisend eine Fördereinrichtung (2), ein Gasventil (5) und eine Regelung und eine Vorsteuerung eines einem Brenner (3) des Heizgerätes (1) zuzuführenden Verbrennungsgemisches aus Verbrennungsluft und Brennstoff sowie ein Regel- und Steuergerät (7) nach Anspruch 7.

9. Computerprogramm, umfassend Befehle, die bewirken, dass ein Heizgerät (1) nach Anspruch 8 die Verfahrensschritte eines Verfahrens nach einem der Ansprüche 1 bis 6 ausführt.


**Claims**

1. Method for operating a heating appliance (1), comprising a control system and a pilot control system for the combustion mixture of fuel and combustion air supplied to a burner (3) of the heating appliance (1), wherein a nominal control variable u for setting an opening position of a gas valve (5) is formed by combining a control variable $u_C$ of the control system and a control variable $u_F$ of the pilot control, and a corrected control variable $u_T$ is formed by means of a correction function $u_T = f(u)$, so that the control variable $u_C$ of the control system is reduced and the nominal control variable u approaches the control variable $u_F$ of the pilot control.

2. Method according to claim 1, wherein the control variable $u_C$ of the control system approaches or equals zero.

3. Method according to one of the preceding claims, wherein the correction function f(u) is adjusted during operation of the heating appliance (1).

4. Method according to claim 3, wherein the adjustment of the correction function f(u) is suspended when a predetermined change in the mass flow of combustion air is exceeded.

5. Method according to claim 4, wherein, when the correction function is adjusted, an opposite signal is generated, whereby, during operation of the heating appliance (1), an effect of the adjustment on the corrected control variable $u_T$ is avoided.

6. Method according to one of the preceding claims, wherein the correction function f(u) provides a corrected control variable $u_T = f(u)$ for the entire modulation range of the heating appliance (1).

7. Control and regulating device (7) set up to carry out a method according to one of claims 1 to 6.

8. Heating appliance (1) comprising a conveyor device (2), a gas valve (5) and a control and pilot control system for a combustion mixture of combustion air and fuel to be supplied to a burner (3) of the heating appliance (1), as well as a control and regulation device (7) according to claim 7.

9. Computer programme comprising commands which cause a heating appliance (1) according to claim 8 to execute the method steps of a method according to one of claims 1 to 6.


**Revendications**

1. Procédé de fonctionnement d'un appareil de chauffage (1) présentant une régulation et une commande pilote du mélange de combustion constitué de combustible et d'air de combustion acheminé vers un brûleur (3) de l'appareil de chauffage (1), dans lequel une grandeur de réglage nominale u pour le réglage d'une position d'ouverture d'une vanne à gaz (5) est cumulée à partir d'une grandeur de réglage $u_C$ de la régulation et d'une grandeur de réglage $u_F$ de la précommande, et une grandeur de réglage corrigée $u_T$ est formée au moyen d'une fonction de correction $u_T = f(u)$, de sorte que la grandeur de réglage $u_C$ de la régulation est réduite et la grandeur de réglage nominale u se rapproche de la grandeur de réglage $u_F$ de la commande pilote.

2. Procédé selon la revendication 1, la grandeur de réglage $u_C$ de la régulation se rapproche de ou égale zéro.

3. Procédé selon l'une quelconque des revendications précédentes, dans lequel la fonction de correction f(u) est ajustée pendant le fonctionnement de l'appareil de chauffage (1).

4. Procédé selon la revendication 3, dans lequel l'ajustement de la fonction de correction f(u) est interrompu en cas de dépassement d'une valeur de modification prédéfinie du débit massique d'air de combustion.

5. Procédé selon la revendication 4, dans lequel, lors d'un ajustement de la fonction de correction, une génération d'un signal opposé est effectuée, moyennant quoi un effet de l'ajustement sur la grandeur de réglage corrigée $u_T$ est évité pendant le fonctionnement de l'appareil de chauffage (1).

6. Procédé selon l'une quelconque des revendications précédentes, dans lequel la fonction de correction f(u) fournit une grandeur de réglage corrigée $u_T$ = f(u) pour l'ensemble de la plage de modulation de l'appareil de chauffage (1).

7. Appareil de régulation et de commande (7) configuré pour mettre en œuvre un procédé selon l'une quelconque des revendications 1 à 6.

8. Appareil de chauffage (1) présentant un appareil de transport (2), une vanne de gaz (5) et une régulation et une commande pilote d'un mélange de combustion constitué d'air de combustion et de combustible à acheminer vers un brûleur (3) de l'appareil de chauffage (1), ainsi qu'un appareil de régulation et de commande (7) selon la revendication 7.

9. Programme informatique comprenant des instructions qui font en sorte qu'un appareil de chauffage (1) selon la revendication 8 met en œuvre les étapes de procédé d'un procédé selon l'une quelconque des revendications 1 à 6.

Fig. 1

# Fig. 2

$$\frac{d\triangle u}{dt}$$

# Fig. 3

Fig. 4

EP 4 357 673 B1

**EP 4 357 673 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1510758 A1

- EP 4194749 A1